# EUROPEAN PATENT APPLICATION

(11) **EP 3 725 608 A1**
(43) Date of publication of application: **21.10.2020**
(21) Application number: 18889528.8
(22) Date of filing: 13.02.2018
(51) Int. Cl.: B60S 5/06, B60L 50/50

(54) **BATTERY REPLACEMENT FAULT DIAGNOSTIC METHOD AND SYSTEM**

(30) Priority: 15.12.2017 CN 201711345910
(71) Applicant: Nio Nextev Limited, Hong Kong (CN)
(72) Inventor: BENGTSSON, Jan, Hong Kong (CN); LI, Nan, Hong Kong (CN); MA, Yongyue, Hong Kong (CN); DING, Xikun, Hong Kong (CN); TIAN, Xiaotao, Hong Kong (CN)
(74) Representative: Vossius & Partner Patentanwälte Rechtsanwälte mbB
(86) International application number: PCT/CN2018/076671
(87) International publication number: WO 2019/114132

(57) **Abstract**

The invention relates to a method and system for battery replacement fault diagnosis. The method comprises: initially positioning a vehicle, and determining whether initial positioning of the vehicle has been completed; moving a hoister to a battery swap position, and determining whether the hoister has been moved to the battery swap position; moving a battery swap trolley to an unlocking position and determining whether the battery swap trolley has been moved to the unlocking position; unlocking a battery by utilizing a battery unlocking strategy, and determining whether a battery unlocking has been completed; moving the battery swap trolley to an exchange location, and determining whether a battery exchange has been completed; moving the battery swap trolley to a locking position, and determining whether the battery swap trolley has been moved to the locking position; locking a battery by utilizing a battery locking strategy, and determining whether a battery locking has been completed; moving the battery swap trolley to the exchange location, and determining whether the battery swap trolley has been moved to the exchange location; and moving the hoister to an initial position, and determining whether the hoister has been moved to the initial position; wherein when it is determined that a fault has occurred, an alarm signal is sent and the method returns to the previous step.

## Description

### Technical Field

The invention relates to the field of control methods and systems. More specifically, the invention relates to a method for battery replacement fault diagnosis of an electric vehicle, which is used to detect and report a fault during a traction battery replacement for a vehicle. The invention further relates to a system for battery replacement fault diagnosis for an electric vehicle.

### Background Art

Electric vehicles are generally powered by batteries. However, technical defects in existing batteries have hindered the broad popularization of electric vehicles, and the most important issue is the range provided per charge. Conventional fuel-operated systems are typically filled with fuel in a petrol station in minutes, while electric vehicles need to take several hours to be recharged. Due to the range provided per charge of batteries, electric vehicles need to be recharged more frequently, and thus long wait for the battery recharging seriously affects the user experience.

Technical solutions have been proposed to quickly remove a used battery from a vehicle and install a fresh battery. Battery removal and installation can be completed in a few minutes, greatly improving the user experience for electric vehicles. However, on the one hand, the existing battery swap system has a complicated control flow, and on the other hand, there are various uncertainties for abnormal processing. In existing plant operations, it is common to rely on the experience of workers to deal with various abnormal cases, which brings about great difficulties for system maintenance.

Therefore, there is a continuing need for a novel method and system for battery replacement fault diagnosis, and it is desirable that the method and system for battery replacement fault diagnosis could solve at least one of the above problems.

### Summary of the Invention

One object of the present invention is to provide a method for battery replacement fault diagnosis capable of diagnosing whether a fault occurs during battery swapping. Another object of the present invention is to provide a system for battery replacement fault diagnosis.

A method for battery replacement fault diagnosis comprises the steps of:
S40: initially positioning a vehicle;
S41: determining whether initial positioning of the vehicle has been completed;
S50: moving a hoister to a battery swap position so as to hoist the vehicle;
S51: determining whether the hoister has been moved to the battery swap position;
S60: moving a battery swap trolley to an unlocking position;
S61: determining whether the battery swap trolley has been moved to the unlocking position;
S70: unlocking a battery by utilizing a battery unlocking strategy;
S71: determining whether a battery unlocking has been completed;
S80: moving the battery swap trolley to an exchange location;
S81: determining whether a battery exchange has been completed;
S90: moving the battery swap trolley to a locking position;
S91: determining whether the battery swap trolley has been moved to the locking position;
S100: locking the battery by utilizing a battery locking strategy;
S101: determining whether a battery locking has been completed;
S110: moving the battery swap trolley to an exchange location;
Sill: determining whether the battery swap trolley has been moved to the exchange location;
S120: moving the hoister to an initial position; and
S121: determining whether the hoister has been moved to the initial position;
wherein when it is determined that a fault has occurred, an alarm signal is sent and the method returns to the previous step.

Optionally, the following steps are further comprised before the step S40,
S10: starting and initializing a system;
S11: determining whether starting and the initialization have been completed;
S20: performing system self-checking and starting safety protection;
S21: determining whether the self-checking and the safety protection are ready;
S30: identifying vehicle and order information;
S31: determining whether the vehicle and order information has been identified.

Optionally, in the step S40, initially positioning a vehicle comprises parking the vehicle above the hoister.

Optionally, in the step S50, the hoister is raised from the initial position to the battery swap position.

Optionally, the battery swap trolley is configured to be horizontally movable, and in the step S60, the battery swap trolley is first moved below the hoister, then maintained at the location and is brought into the unlocking position by changing a vertical position of the hoister; in the step S80, the hoister is first raised, and then the battery swap trolley is moved horizontally to the exchange location; in the step S110, the hoister is first raised, and then the battery swap trolley is moved horizontally to the exchange location; and in the step S90, the battery swap trolley is first moved below the hoister, then maintained at the location and is brought into the locking position by changing the vertical position of the hoister.

Optionally, the battery swap trolley is configured to be capable of being raised and lowered and to be horizontally movable, and in the step S60, the battery swap trolley is first moved below the hoister, and then raised and moved to the unlocking position; in the step S80, the battery swap trolley is first lowered and then moved horizontally to the exchange location; in the step S110, the battery swap trolley is first lowered and then moved horizontally to the exchange location; and in the step S90, the battery swap trolley is first moved below the hoister, and then raised and moved to the locking position.

Optionally, the locking position and the unlocking position are the same.

Optionally, after the hoister is moved to the initial position, the vehicle is started and exits, and if a following vehicle requires a battery replacement, the method returns to the step S40 and continues, and if no following vehicle requires a battery replacement, the method for battery replacement fault diagnosis ends, and a standby state is entered.

A system for battery replacement fault diagnosis comprises:
an initial positioning determination module configured to determine whether initial positioning of a vehicle has been completed;
a battery swap position determination module configured to determine whether a hoister has been moved to a battery swap position;
an unlocking position determination module configured to determine whether a battery swap trolley has been moved to an unlocking position;
an unlocking determination module configured to determine whether a battery unlocking has been completed;
a battery exchange determination module configured to determine whether a battery exchange has been completed;
a locking position determination module configured to determine whether the battery swap trolley has been moved to a locking position;
a locking determination module configured to determine whether a battery locking has been completed;
an exchange location determination module configured to determine whether the battery swap trolley has been moved to an exchange location; and
an initial position determination module configured to determine whether the hoister has been moved to an initial position,
wherein the modules are successively electrically connected, and are respectively electrically connected to a display control module, and wherein the display control module is configured to selectively output signals through a display device based on signals from the modules.

Optionally, the system further comprises:
an initialization determination module configured to determine whether starting and initialization have been completed;
a self-checking and safety protection determination module configured to determine whether self-checking and safety protection are ready; and
a vehicle and order information determination module configured to determine whether vehicle and order information has been identified,
wherein the modules are successively electrically connected, and are respectively electrically connected to the display control module, and wherein the display control module is configured to selectively output signals through the display device based on signals from the modules, and
wherein the vehicle and order information determination module is electrically connected to the initial positioning determination module.

Optionally, the display device is a movable terminal or a fixed terminal.

Optionally, the system further comprises a memory for storing alarm information, the memory being electrically connected to the display control module and being configured to store alarm information from each module.

The battery swap method and system of the invention have the advantages of being simple, reliable, easy to deploy, easy to use, etc., and are capable of diagnosing in real time whether a fault occurs during replacement of an automobile traction battery and transmitting the fault to an operator.

### Brief Description of the Drawings

The invention will be further described in detail below in conjunction with the accompanying drawings and preferred embodiments. However, those skilled in the art would appreciate that the drawings are drawn merely for the purpose of illustrating the preferred embodiments and therefore should not be taken as limiting the scope of the invention. In addition, unless otherwise specified, the drawings are merely intended to be conceptually illustrative of the constitution or construction of the described objects and may include exaggerated representations, and the drawings are not necessarily drawn to scale.

Fig. 1 is a flowchart of an embodiment of a method for battery replacement fault diagnosis of the invention.

Fig. 2 is a schematic diagram of an embodiment of a system for battery replacement fault diagnosis of the invention.

### Detailed Description of Embodiments

Preferred embodiments of the invention will be described below in detail with reference to the accompanying drawings. It will be appreciated by those skilled in the art that these descriptions are merely illustrative and exemplary, and should not be construed as limiting the scope of protection of the invention.

First of all, it should be noted that the orientation terms "top", "bottom", "upward" and "downward", etc. referred to herein are defined with respect to the orientations in the drawings, and they are relative concepts and can thus vary depending on their different locations and different practical states. Therefore, these or other orientation terms should not be construed as limiting terms.

In addition, it should also be noted that any single technical feature described or implied in the embodiments herein, or any single technical feature shown or implied in the drawings, or their equivalents can be further combined with one another, so as to obtain other embodiments of the invention which are not directly mentioned herein.

It should be noted that in different drawings, the same reference numerals denote the same or substantially the same components.

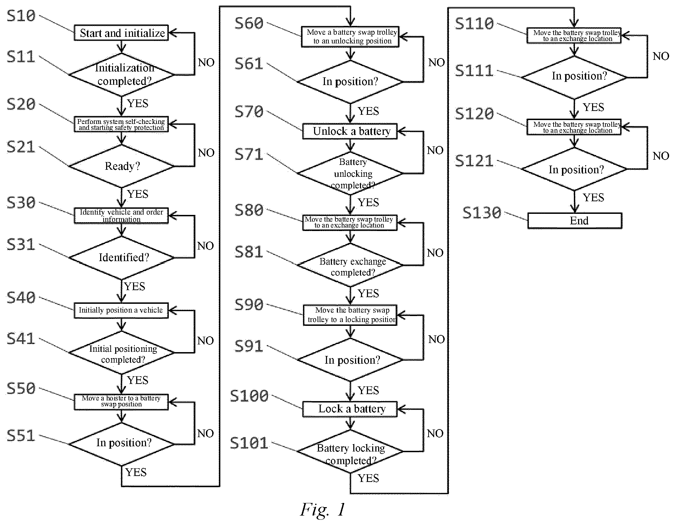

Fig. 1 is a flowchart of an embodiment of a method for battery replacement fault diagnosis of the invention. The method for battery replacement fault diagnosis comprises the steps of:
S40: initially positioning a vehicle;
S41: determining whether initial positioning of the vehicle has been completed;
S50: moving a hoister to a battery swap position so as to hoist the vehicle;
S51: determining whether the hoister has been moved to the battery swap position;
S60: moving a battery swap trolley to an unlocking position;
S61: determining whether the battery swap trolley has been moved to the unlocking position;
S70: unlocking a battery by utilizing a battery unlocking strategy;
S71: determining whether a battery unlocking has been completed;
S80: moving the battery swap trolley to an exchange location;
S81: determining whether a battery exchange has been completed;
S90: moving the battery swap trolley to a locking position;
S91: determining whether the battery swap trolley has been moved to the locking position;
S100: locking the battery by utilizing a battery locking strategy;
S101: determining whether a battery locking has been completed;
S110: moving the battery swap trolley to an exchange location;
Sill: determining whether the battery swap trolley has been moved to the exchange location;
S120: moving the hoister to an initial position; and
S121: determining whether the hoister has been moved to the initial position.

The method for battery replacement fault diagnosis is provided with nine determination steps and nine operation steps. The determination steps respectively and correspondingly determine whether a fault occurs in the previous operation step. If it is determined that a fault has occurred in a determination step, an alarm signal is sent and the method returns to the preceding operation step. The user can be informed of the alarm signal, analyzes which operation step has a problem, and can optionally manually intervene in the battery replacement operation or continue to automatically perform this operation step so as to eliminate the fault. After each of the determination steps determines that the previous operation step has been correctly completed, the next operation step is performed.

Optionally, the following steps are further comprised before the step S40,
S10: starting and initializing a system;
S11: determining whether starting and the initialization have been completed;
S20: performing system self-checking and starting safety protection;
S21: determining whether the self-checking and the safety protection are ready;
S30: identifying vehicle and order information;
S31: determining whether the vehicle and order information has been identified.

The above steps are preparation steps prior to the start of a vehicle battery replacement operation, including system starting, initialization, self-checking, starting safety protection, vehicle and order information identification, etc. These steps are not performed in every operation of the method for battery replacement fault diagnosis of the invention. For example, after the above preparation steps are performed, the steps S40 to S121 described above can be performed repeatedly to continuously replace vehicle-mounted batteries.

The vehicle and order information identified in the step S30 may be used for the determination in subsequent steps, for example, the model of a vehicle is determined according to the vehicle information, and different batteries, different movement speeds, different locking positions and/or unlocking positions, different locking strategies and/or unlocking strategies or the like may be selectively adopted in the subsequent steps. As another example, different user requirements are determined according to the order information, and customer-specific operation steps can be selectively added in the subsequent steps.

Optionally, in the step S40, initially positioning a vehicle comprises parking the vehicle above the hoister. Parking the vehicle above the hoister helps the hoister make contact with preset support points on the bottom of the vehicle, and the support points may be vehicle tires or some components of the bottom frame of the vehicle.

Optionally, in the step S50, the hoister is raised from the initial position to the battery swap position. In the subsequent step S120, the hoister is returned to the initial position after the battery has been replaced. The initial position may for example be a position in which an upper surface of the hoister is at the same level as the surface of the vehicle parking platform, so that a following vehicle may be initially positioned on the vehicle parking platform.

Optionally, the battery swap trolley is configured to be horizontally movable, and in the step S60, the battery swap trolley is first moved below the hoister, then maintained at the location and is brought into the unlocking position by changing a vertical position of the hoister; in the step S80, the hoister is first raised, and then the battery swap trolley is moved horizontally to the exchange location; in the step S 110, the hoister is first raised, and then the battery swap trolley is moved horizontally to the exchange location; and in the step S90, the battery swap trolley is first moved to a location below the hoister, then maintained at the location and is brought into the locking position by changing the vertical position of the hoister.

In this alternative embodiment, the battery swap trolley is configured to be movable only between the exchange location and a location below the hoister, and the relative position of the battery swap trolley and the vehicle may be changed by the ascending and descending of the hoister, thus facilitating the movement of the battery swap trolley into or out of the unlocking position or the locking position. Such a design allows the structure and design costs of the battery swap trolley to be relatively simple, which helps to reduce the manufacturing cost of the entire platform.

Optionally, the battery swap trolley is configured to be capable of being raised and lowered and to be horizontally movable, and in the step S60, the battery swap trolley is first moved below the hoister, and then raised and moved to the unlocking position; in the step S80, the battery swap trolley is first lowered and then moved horizontally to the exchange location; in the step S 110, the battery swap trolley is first lowered and then moved horizontally to the exchange location; and in the step S90, the battery swap trolley is first moved below the hoister, and then raised and moved to the locking position.

In above alternative embodiment, the battery swap trolley can not only move between the exchange location and a location below the hoister, but also be raised or lowered in a vertical direction when it is located at the location below the hoister, thus facilitating the movement of the battery swap trolley into or out of the unlocking position or the locking position. With such a configuration, the hoister has no need to move during battery replacement, thereby reducing the complexity of the operation.

Optionally, in the step(s) S70 and/or S100, different battery unlocking strategies and/or battery locking strategies are selected according to different battery mounting manners and mechanisms. For example, the battery can be suspended to the bottom of the vehicle through hooking means or can be engaged to the bottom of the vehicle through retractable fixing means. Those skilled in the art would be able to design different unlocking or locking strategies according to actual needs, which are not limited to the approaches mentioned above and others conceivable. During the execution of a strategy, the hoister and/or the battery swap trolley can be subjected to appropriate position changes according to the actual needs so as to perform the locking/unlocking operation on the battery.

Optionally, the locking position and the unlocking position are the same. In some embodiments, the battery can be locked and unlocked in locking and unlocking positions which are the same. In other embodiments, the locking position and the unlocking position are spaced apart from each other. Whether the locking position and the unlocking position are the same depends on different locking/unlocking strategies.

Optionally, the vehicle may start and exit a battery swap station after the hoister is moved to the initial position. As another example, if a following vehicle requires a battery replacement, the method can return to the step S40 to continue the method for battery replacement fault diagnosis. If no following vehicle requires a battery replacement, the method for battery replacement fault diagnosis ends, and a standby state is entered.

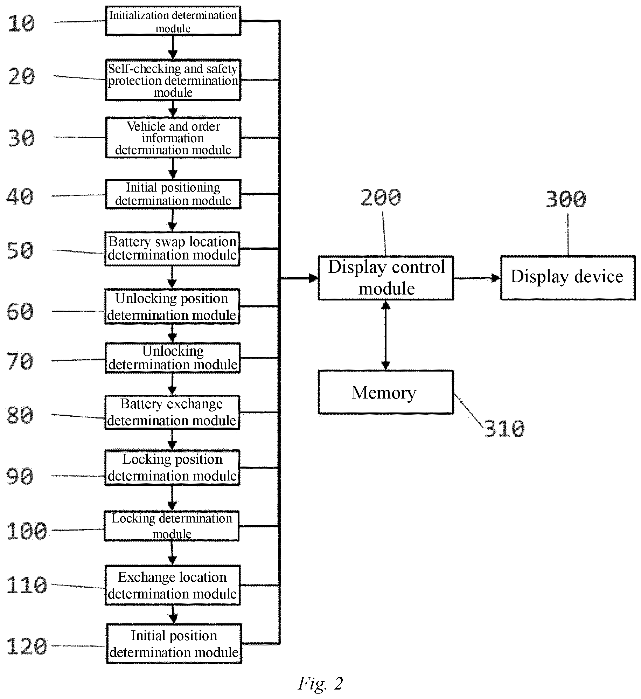

Fig. 2 is a schematic diagram of an embodiment of a system for battery replacement fault diagnosis of the invention. The system for battery replacement fault diagnosis comprises:
an initial positioning determination module 40 configured to determine whether the initial positioning of a vehicle has been completed;
a battery swap position determination module 50 configured to determine whether a hoister has been moved to a battery swap position;
an unlocking position determination module 60 configured to determine whether a battery swap trolley has been moved to an unlocking position;
an unlocking determination module 70 configured to determine whether a battery unlocking has been completed;
a battery exchange determination module 80 configured to determine whether a battery exchange has been completed;
a locking position determination module 90 configured to determine whether the battery swap trolley has been moved to a locking position;
a locking determination module 100 configured to determine whether a battery locking has been completed;
an exchange location determination module 110 configured to determine whether the battery swap trolley has been moved to an exchange location; and
an initial position determination module 120 configured to determine whether the hoister has been moved to an initial position,
wherein the above-mentioned modules are successively electrically connected, and are respectively electrically connected to a display control module 200, and
wherein the display control module 200 is configured to selectively output signals through a display device 300 based on signals from the above-mentioned modules.

The above-mentioned system for battery replacement fault diagnosis may be configured to perform the method for battery replacement fault diagnosis described above. The determination modules of the system for battery replacement fault diagnosis are respectively in one-to-one correspondence with the nine determination steps of the method for battery replacement fault diagnosis.

Optionally, the system for battery replacement fault diagnosis further comprises:
an initialization determination module 10 configured to determine whether starting and initialization have been completed;
a self-checking and safety protection determination module 20 configured to determine whether self-checking and safety protection are ready; and
a vehicle and order information determination module 30 configured to determine whether vehicle and order information has been identified,
wherein the above-mentioned modules are successively electrically connected, and are respectively electrically connected to a display control module 200,
and wherein the display control module 200 is configured to selectively output signals through the display device 300 based on signals from the modules, and
wherein the vehicle and order information determination module 30 is electrically connected to the initial positioning determination module 40.

In above alternative embodiment, the system for battery replacement fault diagnosis comprises three additional determination modules for performing routine maintenance operations when the system for battery replacement fault diagnosis is started, so as to ensure proper operation of the following determination modules.

Optionally, the display device 300 is a movable terminal or a fixed terminal. For example, the display device 300 may be a mobile phone, a tablet, a handheld control terminal, etc., and may also be a display, a projector, a signal light assembly and the like which are fixedly arranged.

Optionally, the display control module 200 outputs different signals according to the output states of the modules. For example, names of the operation steps corresponding to the modules may be respectively displayed on the display device 300, and the user may be informed of the progress of the operation steps by colours, sound and/or pop-up windows. As another example, if a fault is detected in one operation step (of which the corresponding performance is that the detection module corresponding to this operation step does not send an electrical signal to the next module for a long time), it can be determined that an abnormal condition occurs in this operation step, and at this time the display device 300 can display a corresponding alarm.

Optionally, the system for battery replacement fault diagnosis further comprises a memory 310 for storing alarm information, the memory being electrically connected to the display control module 200 and being configured to store alarm information from each module. For example, in a single operation, the fault information output from the determination modules are stored in the memory 310, and may be selectively partially or fully output to the display device 300 by the display control module 200.

Based on the above disclosure, those skilled in the art would readily apply the method for battery replacement fault diagnosis of the invention to battery swap station systems or other devices to obtain battery swap station systems and devices comprising the method for battery replacement fault diagnosis of the invention.

The method and system for battery replacement fault diagnosis of the invention can continuously and uninterruptedly detect the states of the operation steps during the battery replacement of a vehicle, and send corresponding signals to the operator in time when a fault occurs in a certain operation step, so that the operator can eliminate the fault. This allows the operator to eliminate faults without having to rely on debugging experience or accumulated error handling, thereby greatly improving the fault eliminating efficiency in battery replacement and effectively improving the maintainability and user experience of the battery swap station.

The invention is disclosed in this description with reference to the accompanying drawings, and those skilled in the art would be able to practice the invention, including manufacturing and using any device or system, selecting suitable materials, and using any combined methods. The scope of the invention is defined by the claimed technical solutions, and includes other examples conceivable by those skilled in the art. So long as such other examples include structural elements that do not differ from the literal language of the claimed technical solutions or such other examples include equivalent structural elements which are not substantially different from the literal language of the claimed technical solutions, such other examples should be considered to be within the scope of protection as determined by the claimed technical solutions of the invention.

## Claims

1. A method for battery replacement fault diagnosis, **characterized by** comprising the steps of:
S40: initially positioning a vehicle;
S41: determining whether initial positioning of the vehicle has been completed;
S50: moving a hoister to a battery swap position;
S51: determining whether the hoister has been moved to the battery swap position;
S60: moving a battery swap trolley to an unlocking position;
S61: determining whether the battery swap trolley has been moved to the unlocking position;
S70: unlocking a battery by utilizing a battery unlocking strategy;
S71: determining whether a battery unlocking has been completed;
S80: moving the battery swap trolley to an exchange location;
S81: determining whether a battery exchange has been completed;
S90: moving the battery swap trolley to a locking position;
S91: determining whether the battery swap trolley has been moved to the locking position;
S100: locking the battery by utilizing a battery locking strategy;
S101: determining whether a battery locking has been completed;
S110: moving the battery swap trolley to an exchange location;
Sill: determining whether the battery swap trolley has been moved to the exchange location;
S120: moving the hoister to an initial position; and
S121: determining whether the hoister has been moved to the initial position;
wherein when it is determined that a fault has occurred, an alarm signal is sent and the method returns to the previous step.

2. The battery swap method according to claim 1, **characterized by** further comprising the following steps before the step S40,
S10: starting and initializing a system;
S11: determining whether starting and the initialization have been completed;
S20: performing system self-checking and starting safety protection;
S21: determining whether the self-checking and the safety protection are ready;
S30: identifying vehicle and order information;
S31: determining whether the vehicle and order information has been identified.

3. The battery swap method according to claim 2, **characterized in that** in the step S40, initially positioning the vehicle comprising parking the vehicle on the hoister.

4. The battery swap method according to claim 2, **characterized in that** in the step S50, the hoister is raised from the initial position to the battery swap position.

5. The battery swap method according to any one of claims 1-4, **characterized in that** the battery swap trolley is configured to be horizontally movable, and in the step S60, the battery swap trolley is first moved to a location below the hoister, then maintained at the location and is brought into the unlocking position by changing the vertical position of the hoister; in the step S80, the hoister is first raised, and then the battery swap trolley is moved horizontally to the exchange location; in the step S110, the hoister is first raised, and then the battery swap trolley is moved horizontally to the exchange location; and in the step S90, the battery swap trolley is first moved to a location below the hoister, then maintained at the location and is brought into the locking position by changing the vertical position of the hoister.

6. The battery swap method according to any one of claims 1-4, **characterized in that** the battery swap trolley is configured to be horizontally movable, and in the step S60, the battery swap trolley is first moved below the hoister and then is raised and brought into the unlocking position; in the step S80, the battery swap trolley is first lowered and then moved horizontally to the exchange location; in the step S110, the battery swap trolley is first lowered and then moved horizontally to the exchange location; and in the step S90, the battery swap trolley is first moved below the hoister, and then raised and moved to the locking position.

7. The battery swap method according to any one of claims 1-4, **characterized in that** the locking position and the unlocking position are the same.

8. The battery swap method according to any one of claims 1-4, **characterized in that** after the hoister is moved to the initial position, the vehicle is started and exits, and if a following vehicle requires a battery replacement, the method returns to the step S40 and continues, and if no following vehicle requires a battery replacement, the method for battery replacement fault diagnosis ends, and a standby state is entered.

9. A system for battery replacement fault diagnosis, **characterized by** comprising:
an initial positioning determination module configured to determine whether initial positioning of a vehicle has been completed;
a battery swap position determination module configured to determine whether a hoister has been moved to a battery swap position;
an unlocking position determination module configured to determine whether a battery swap trolley has been moved to an unlocking position;
an unlocking determination module configured to determine whether a battery unlocking has been completed;
a battery exchange determination module configured to determine whether a battery exchange has been completed;
a locking position determination module configured to determine whether the battery swap trolley has been moved to a locking position;
a locking determination module configured to determine whether a battery locking has been completed;
an exchange location determination module configured to determine whether the battery swap trolley has been moved to an exchange location; and
an initial position determination module configured to determine whether the hoister has been moved to an initial position,
wherein the modules are successively electrically connected, and are respectively electrically connected to a display control module, and wherein the display control module is configured to selectively output signals through a display device based on signals from the modules.

10. The system for battery replacement fault diagnosis according to claim 9, **characterized by** further comprising:
an initialization determination module configured to determine whether starting and initialization have been completed;
a self-checking and safety protection determination module configured to determine whether self-checking and safety protection are ready; and
a vehicle and order information determination module configured to determine whether vehicle and order information has been identified,
wherein the modules are successively electrically connected, and are respectively electrically connected to the display control module, and wherein the display control module is configured to selectively output signals through the display device based on signals from the modules, and
wherein the vehicle and order information determination module is electrically connected to the initial positioning determination module.

11. The system for battery replacement fault diagnosis according to claim 9 or 10, **characterized in that** the display device is a movable terminal or a fixed terminal.

12. The system for battery replacement fault diagnosis according to claim 9 or 10, **characterized by** further comprising a memory for storing alarm information, the memory being electrically connected to the display control module and being configured to store alarm information from each module.
